(19) **Europäisches Patentamt**

**European Patent Office**

**Office européen des brevets**

(11) **EP 1 050 112 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(21) Anmeldenummer: **99907258.0**

(22) Anmeldetag: **20.01.1999**

(51) Int Cl.⁷: **H04B 1/26**, H03D 7/16

(86) Internationale Anmeldenummer:
**PCT/DE99/00131**

(87) Internationale Veröffentlichungsnummer:
**WO 99/38269 (29.07.1999 Gazette 1999/30)**

(54) **SCHALTUNG ZUR DEMODULATION VON DURCH GETRÄGERTE DATENÜBERTRAGUNG GESENDETEN ZWEIDIMENSIONALEN DATENSYMBOLEN**

CIRCUIT FOR DEMODULATING TWO-DIMENSIONAL DATA SYMBOLS TRANSMITTED BY MEANS OF SUPPORTED DATA TRANSMISSION

CIRCUIT DE DEMODULATION DE SYMBOLES DE DONNEES EN DEUX DIMENSIONS, TRANSMIS PAR TRANSMISSION DE DONNEES

(84) Benannte Vertragsstaaten:
**DE ES FR GB IT**

(30) Priorität: **22.01.1998 DE 19802373**

(43) Veröffentlichungstag der Anmeldung:
**08.11.2000 Patentblatt 2000/45**

(73) Patentinhaber: **Infineon Technologies AG
81669 München (DE)**

(72) Erfinder: **SCHÖLLHORN, Peter
D-82008 Unterhaching (DE)**

(74) Vertreter: **Zedlitz, Peter, Dipl.-Inf.
Patentanwalt,
Postfach 22 13 17
80503 München (DE)**

(56) Entgegenhaltungen:
EP-A- 0 629 040     US-A- 5 130 802
US-A- 5 696 796

## Beschreibung

Die Erfindung betrifft eine Schaltung zur Demodulation von durch geträgerte Datenübertragung gesendeten zweidimensionalen Datensymbolen der im Oberbegriff des Anspruchs 1 bzw. des Anspruchs 2 genannten Art.

Die Erfindung liegt auf dem Gebiet der Demodulation von zweidimensionalen Datensymbolen und betrifft damit nahezu alle modernen Verfahren zur geträgerten Datenübertragung bzw. zur Datenübertragung auf Grundlage einer Trägerfrequenz (DVB-T, DVB-S, DVB-C, DAB, ADSL, etc.). Heutzutage ist es üblich, die Demodulation mit Hilfe der digitalen Signalverarbeitung durchzuführen.

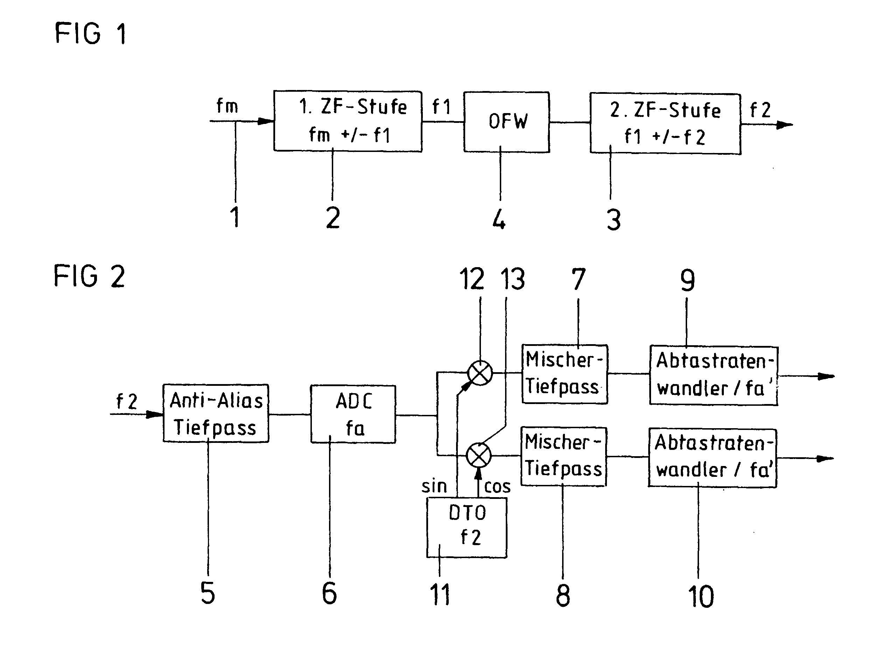

Fig. 1 zeigt den üblichen Aufbau eines Tuners zum Empfang geträgerter Signale mit der Trägerfrequenz fm. Die Signale werden z.B. mit Hilfe einer Antenne oder über einen Kabelanschluß in den Tuner am Eingang 1 eingespeist. Der Tuner umfaßt zwei Zwischenfrequenz-Stufen 2 und 3: in der ersten Zwischenfrequenz-Stufe 2 wird auf eine erste Zwischenfrequenz f1 umgesetzt, damit mit Hilfe eines der ersten Zwischenfrequenz-Stufe nachgeschalteten steilflankigen Oberflächenwellenfilters 4 der gewünschte Kanal ausgefiltert werden kann. Nachbarkanäle werden dabei stark unterdrückt. In der auf den Filter 4 folgenden zweiten Zwischenfrequenz-Stufe 3 wird auf eine weitere kleinere Zwischenfrequenz f2 umgesetzt, damit das Signal mit einem Analog/Digitalwandler digitalisiert werden kann. Für die beiden Zwischenfrequenz-Umsetzungen können prinzipiell jeweils zwei Mischerfrequenzen gewählt werden, nämlich eine auf einer Summenbildung basierende Mischerfrequenz: Eingangsträgerfrequenz + Ausgangsträgerfrequenz bzw. eine auf einer Differenzbildung basierende Mischerfrequenz: Eingangsträgerfrequenz - Ausgangsträgerfrequenz.

Fig. 2 zeigt den Aufbau eines digitalen Quadraturdemodulators, dessen Aufgabe es ist, das durch den Tuner von Fig. 1 empfangene Eingangssignal mit der Trägerfrequenz f2 ins Basisband umzusetzen und dabei auch eine Aufspaltung des Signals in die Inphase- und Quadraturkomponenten durchzuführen. Üblicherweise werden dabei zunächst mit Hilfe eines analogen Anti-Alias-Filters 5 alle störenden Spektralanteile unterdrückt, die durch die Abtastung ins Nutzband gefaltet werden könnten. Mischerbausteine, wie sie für preiswerte Konsumgüter beispielsweise auf dem Gebiet der Unterhaltungselektronik in der zweiten Zwischenfrequenz-Stufe 3 des Tuners eingesetzt werden, enthalten in ihrem Ausgangssignal störende Komponenten, die den Schaltungsaufwand für das Anti-Alias-Filter 5 stark erhöhen. Die am stärksten störende Komponente entsteht dabei durch Übersprechen des Oszillatorsignals mit der Frequenz f1-f2 oder f1+f2.

Auf das Filter 5 folgt im Quadraturdemodulator ein mit einer vorbestimmten Abtastfrequenz fa betriebener A/D-Wandler 6, auf den zwei parallel geschaltete Mischer-Tiefpässe 7 ,8 und zwei ebenfalls parallel geschaltete, mit einer Frequenz fa' betriebene Abtastratenwandler 9, 10 folgen. Zwischen den A/D-Wandler 6 und die beiden Mischer-Tiefpässe 7, 8 sind Multiplikationsstufen 12, 13 geschaltet, die durch einen mit der Frequenz f2 arbeitenden DTO-(digital time oscillator)-Schaltkreis 11 zur Bildung eines Quadraturmischers gesteuert sind.

Nach der Abtastung im A/D-Wandler 6 wird mit Hilfe des Quadraturmischers, bestehend aus den Komponenten 11, 12, 13, das Eingangssignal in die beiden Inphase- und Quadraturkomponentensignale, von denen jeweils eines dem Mischer-Tiefpaß 7 bzw. 8 zugeführt wird, aufgespalten. Die digitalen Mischer-Tiefpässe 7, 8 unterdrücken die bei der Mischung entstandenen Signale mit der Summenfrquenz. Durch die beiden synchron arbeitenden Abtastratenwandler 9, 10 wird auf eine virtuelle Abtastfrequenz fa' umgerechnet, die synchron zu der im Empfangssignal enthaltenen Abtastrate fa ist.

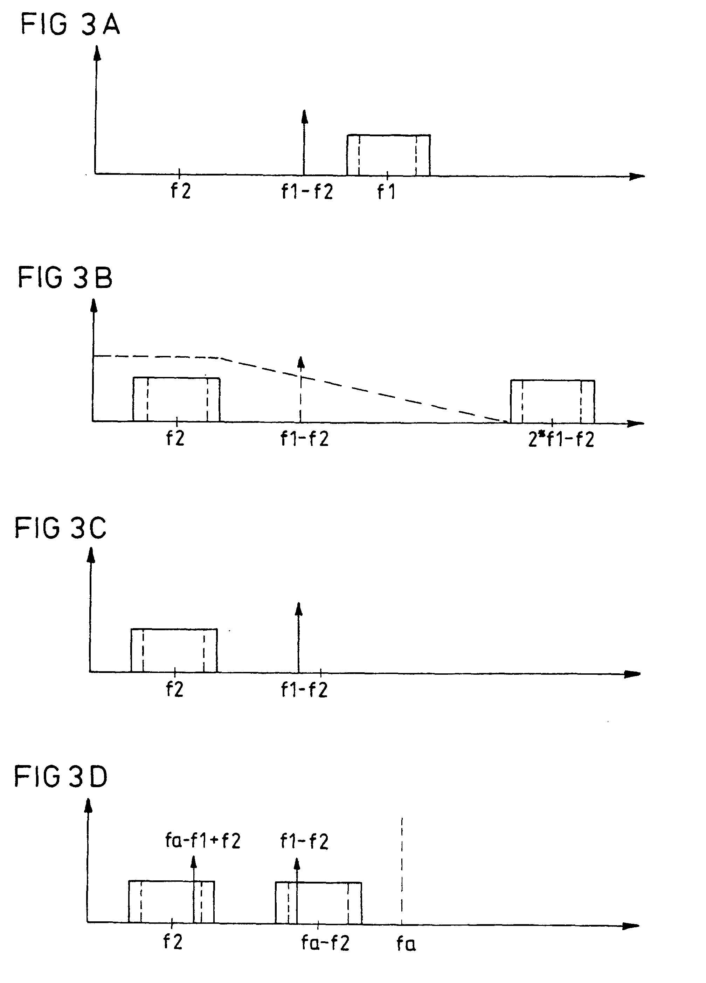

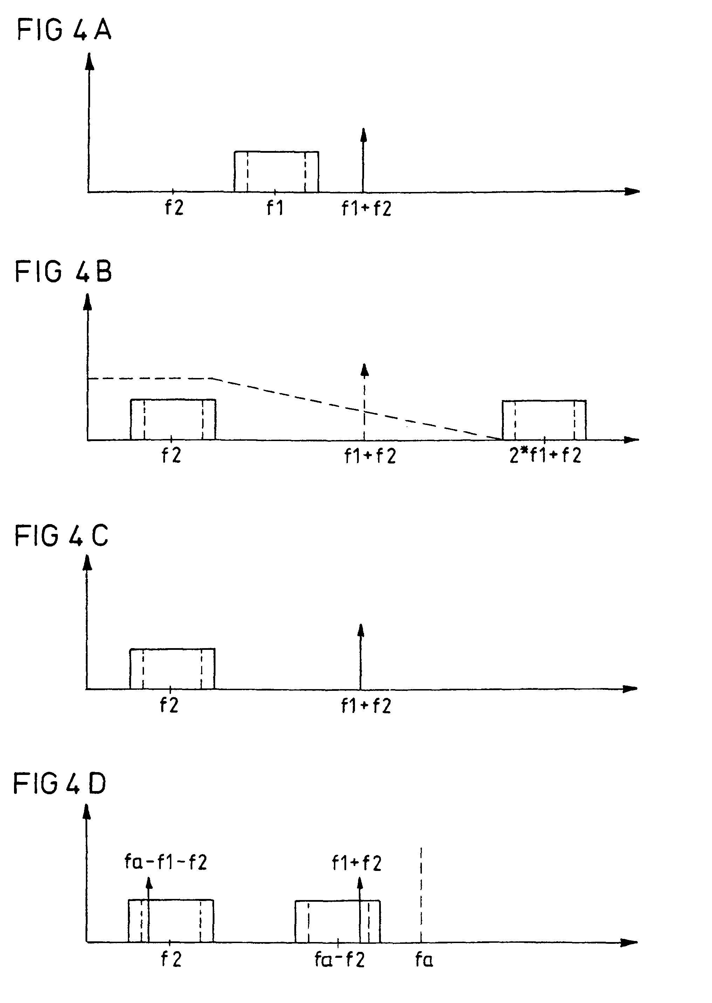

Die Fig. 3A bis 3D und 4A bis 4D zeigen schematisch die Signalspektren an unterschiedlichen Punkten der den Tuner und den Quadraturdemodulator gemäß Fig. 1 bzw. 2 umfassenden Schaltung. Fig. 3A zeigt das Spektrum mit der Mischerfrequenz f1-f2 am Eingang der zweiten Zwischenfrequenz-Stufe 3. Fig. 3B zeigt das Ausgangsspektrum nach Mischung mit der Mischerfrequenz f1-f2. Fig. 3C zeigt das Ausgangsspektrum des Mischers bei Übersprechen des Oszillators, wobei die Summenterme als unterdrückt angenommen sind, und Fig. 3D zeigt das Spektrum nach Abtastung mit der Frequenz fa. Die Fig. 3A bis 3D unterscheiden sich von den Fig.4A bis 4D lediglich durch unterschiedliche Mischerfrequenzen, weshalb nachfolgend der Einfachheit halber nur die Fig. 3A bis 3D im einzelnen erläutert werden.

Fig. 3A zeigt das Spektrum des Signals am Eingang der zweiten Zwischenfrequenz-Stufe 3 und die Lage der Oszillatorfrequenz.

Fig. 3B zeigt das Spektrum nach der Mischung. Die Filterfunktion des Anti-Alias-Filters 5 ist in dieser Figur 3B strichliert dargestellt. Der Summenterm 2·f1-f2 (in Fig. 4B also 2·f1+f2) muß durch das Anti-Alias-Filter 5 unterdrückt werden. Tritt nun infolge des vorstehend angesprochenen Übersprechens auch eine Spektrallinie mit der Frequenz f1-f2 (in Fig. 4B also f1+f2) auf, muß i.a. das Anti-Alias-Filter 5 diese Spektrallinielinie ebenfalls unterdrücken, was zu einem stark erhöhten Schaltungsaufwand führt. Unterbleibt diese Spektrallinien-Unterdrückung, wird diese Komponente i.a. bei der Abtastung ins Nutzband gefaltet, wie Fig. 3D bzw. 4D zeigt und die Empfangsqualität wird deutlich verschlechtert.

Folgende Probleme ergeben sich beim Betrieb der vorstehend erläuterten Schaltung:

1. Die Frequenzen fl und f2 der Zwischenfrequenz-Stufen 2, 3 und die Abtastfrequenz fa des Quadraturdemodulators müssen so gewählt werden, daß die störende Spektrallinie nach der Abtastung nicht im Nutzband liegt und damit mit Hilfe digitaler Filter unschädlich gemacht werden kann. Die Auswahl der Frequenzen ist dabei dadurch beschränkt, daß die Frequenz f1 in zahlreichen Anwendungsfällen fest vorgegeben ist.

2. Die beiden Mischerfrequenzen f1-f2 und f1+f2 müssen mit ein und derselben Schaltung verarbeitbar sein.

3. Die Anforderungen an die Mischer-Tiefpässe 7, 8 müssen minimiert werden, d.h. der Übergangsbereich zwischen Durchlaß- und Sperrbereich soll so groß wie möglich sein.

4. Unterschiedliche Signalbandbreiten müssen ohne Veränderung der Frequenzen f1, f2 und fa, verarbeitet werden können. In Fig. 3 und 4 ist die jeweils größte Bandbreite mit durchgezogenen Linien dargestellt, kleinere Bandbreiten sind durch gestrichelte Linien angedeutet.

Zur Lösung dieser Probleme ist für den Fall eines DVB-T-Empfängers vorgeschlagen worden, externe VCXOs zu verwenden um eine Abtastfrequenz bereitzustellen, die synchron zur Datenrate ist. Diese Maßnahme löst das vorstehend angesprochene Problem jedoch nur zum Teil.

Bezüglich des Oszillatorübersprechens trägt der Anti-Alias-Filter 5 die gesamte Last. Durch geschickte Wahl der Zwischenfrequenz f2 kann der Schaltungsaufwand für den Mischer-Tiefpaß 7 bzw. 8 reduziert werden. Allerdings kann diese Optimierung nur für jeweils eine Symbolrate durchgeführt werden.

Für eine zweite Rate müssen sowohl die Abtastrate als auch die Frequenz f2 umgeschaltet werden, was pro Abtastrate zwei Schwingquarze erfordert.

Zudem existieren bereits Lösungen, die eine beliebige Wahl der Abtastfrequenz zulassen und durch numerische Verfahren einen Datenstrom mit einer Abtastrate erzeugen, die auf die Abtastrate des Senders synchronisiert ist (Abtastratenwandlung, virtuelle Abtastung). Dabei wird allerdings davon ausgegangen, daß Störkomponenten im analogen Eingangssignal durch analoge Anti-Alias-Filter vor dem Analog/Digitalwandler vollständig unterdrückt werden.

Diese analogen Filter sind - vor allem wenn sie auf einem CMOS-IC integriert werden sollen - mit großen Fertigungstoleranzen behaftet. Insbesondere steile Filterflanken und tiefe frequenzgenaue Übertragungsnullstellen (sog. Fallen) erfordern einen hohen Realisierungsaufwand, der eine Integration stark erschwert. Problematisch sind dabei Abgleich, Rauschen und nichtlineare Verzerrungen.

Obwohl theoretisch möglich, sind Tuner auf Grundlage einer einzigen Zwischenfrequenz-Stufe bislang mangels geeigneter Analog/Digitalwandler nicht realisiert worden. Wegen der starken Vereinfachung gegenüber einem herkömmlichen Tuner mit zwei Zwischenfrequenz-Stufen besteht jedoch grundsätzlich ein starker Bedarf an einer derartigen einfacheren Schaltung, ohne Beeinträchtigungen der Demodulation in Kauf nehmen zu müssen, die durch Gleichanteile am Ausgang des Analog/Digitalwandlers bislang zu erwarten sind.

Das Ziel der vorliegenden Erfindung wird deshalb darin gesehen, eine Demodulationsschaltung der im Oberbegriff des Anspruchs 1 bzw. des Anspruchs 2 genannten Art zu schaffen, die es erlaubt, daß die Abtastfrequenz des Analog/Digitalwandlers unabhängig von der Symbolrate wählbar ist und die gewährleistet, daß störende Spektralkomponenten im Ausgangssignal des Tuners durch die Abtastung nicht ins Nutzband gefaltet werden. Somit soll durch einfache Maßnahmen im digitalen Quadraturdemodulator gewährleistet sein, daß Gleichanteile am Ausgang des Analog/Digitalwandlers die Demodulation nicht beeinträchtigen.

Gelöst wird diese Aufgabe durch Schaltungen zur Demodaltion, wie dies in den Ansprüchen 1 oder 2 angegeben sind.

Vorteilhafte Weiterbildungen der Erfindung sind in den Unteransprüchen angegeben.

Demnach können die vorstehend angeführten Probleme erfindungsgemäß elegant, d.h. in überraschend einfacher Weise durch eine geeignete Festlegung der Zwischen- und Abtastfrequenzen überwunden werden.

Mit anderen Worten basiert die Erfindung auf der Erkenntnis eines mathematischen Zusammenhangs, der angibt, wie die Abtastfrequenz des digitalen Quadraturdemodulators und die Zwischenfrequenz(en) des Tuners gewählt werden muß (müssen), um die Alias-Komponenten, die durch die Abtastung des Oszillatorübersprechens, das in der zweiten Stufe des Tuners entstehen kann, unabhängig von der Symbolrate des Datensignals in eine bestimmte Frequenzlage zu bringen. Diese bestimmte Frequenzlage soll gewährleisten, daß das Störsignal im digitalen Quadraturdemodulator mit einfachen Mitteln unterdrückt werden kann. Der Gleichanteil am Ausgang des Analog/Digitalwandlers wird dabei automatisch unschädlich gemacht.

Letztgenannter Effekt ist auch bei Empfängerkonzepten mit direkter Abtastung einer einzigen Zwischenfrequenz des Tuners wirksam.

Nachfolgend wird die erfindungsgemäße Schaltung zur Demodulation anhand der Zeichnung beispielhaft näher erläutert. Es zeigen:

Fig. 1          ein Blockdiagramm einer Ausführungsform eines Tuners mit zwei Zwischenfrequenz-Stufen einer bekannten Schaltung zur Demodulation von durch geträgerte Datenübertragung gesendeten zweidimensionalen Datensymbolen,

| Fig. 2 | ein Blockdiagramm einer Ausführungsform eines digitalen Quadraturdemodulators einer den Tuner von Fig. 1 umfassenden Schaltung zur Demodulation von durch geträgerte Datenübertragung gesendeten zweidimensionalen Datensymbolen, |
| Fig. 3A bis 3D | erste Frequenz-Amplitudendiagramme von Signalspektren an unterschiedlichen Meßpunkten des Tuners bzw. des Quadraturdemodulators von Fig. 1 bzw. 2 bei herkömmlich gewählten Zwischenfrequenz- und Abtastfrequenzen, |
| Fig. 4A bis 4D | zweite Frequenz-Amplitudendiagramme von Signalspektren an unterschiedlichen Meßpunkten des Tuners bzw. des Quadraturdemodulators von Fig. 1 bzw. 2 bei herkömmlich gewählten, jedoch anderen als in Fig. 3A bis 3D dargestellten Zwischenfrequenz- und Abtastfrequenzen, |
| Fig. 5A bis 5C | dritte Frequenz-Amplitudendiagramme von Signalspektren an unterschiedlichen Meßpunkten des Tuners bzw. des Quadraturdemodulators von Fig. 1 bzw. 2 bei erfindungsgemäß festgelegten ersten Zwischenfrequenz- und Abtastfrequenzen, |
| Fig. 6A bis 6C | vierte Frequenz-Amplitudendiagramme von Signalen an unterschiedlichen Meßpunkten des Tuners bzw. des Quadraturdemodulators von Fig. 1 bzw. 2 bei erfindungsgemäß festgelegten zweiten Zwischenfrequenz- und Abtastfrequenzen, |
| Fig. 7A und 7B | fünfte Frequenz-Amplitudendiagramme von Signalspektren an unterschiedlichen Meßpunkten des Tuners bzw. des Quadraturdemodulators von Fig. 1 bzw. 2 bei erfindungsgemäß festgelegten dritten Zwischenfrequenz- und Abtastfrequenzen, |
| Fig. 8A bis 8C | sechste Frequenz-Amplitudendiagramme von Signalspektren an unterschiedlichen Meßpunkten des Tuners mit einer einzigen Zwi- |

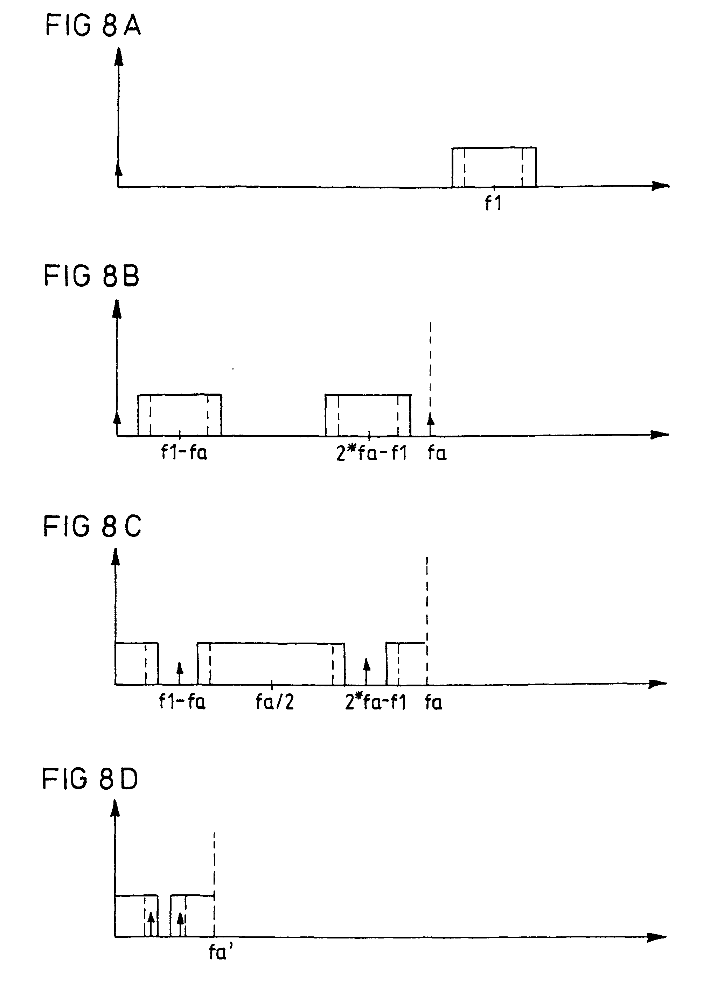

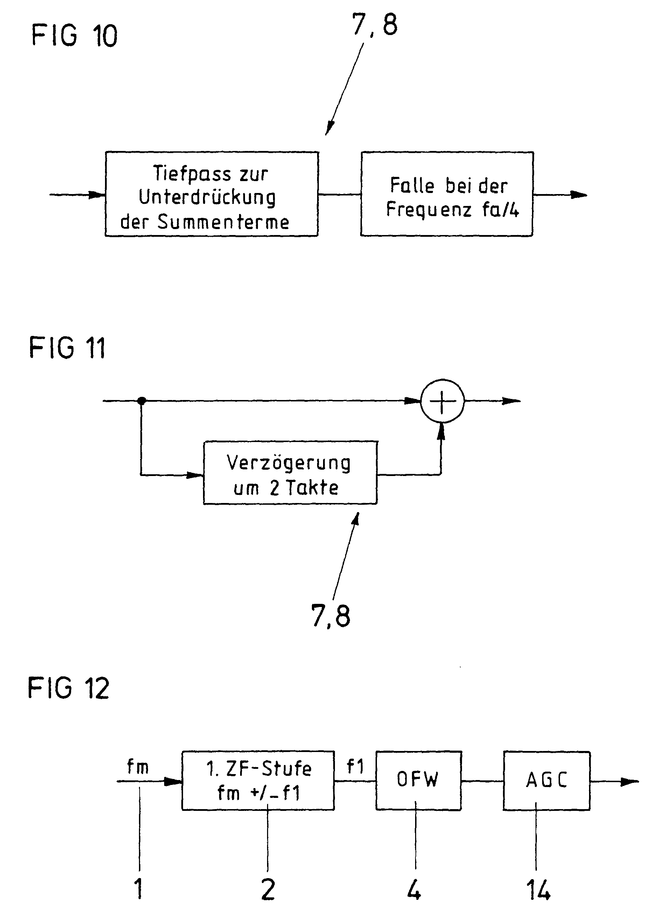

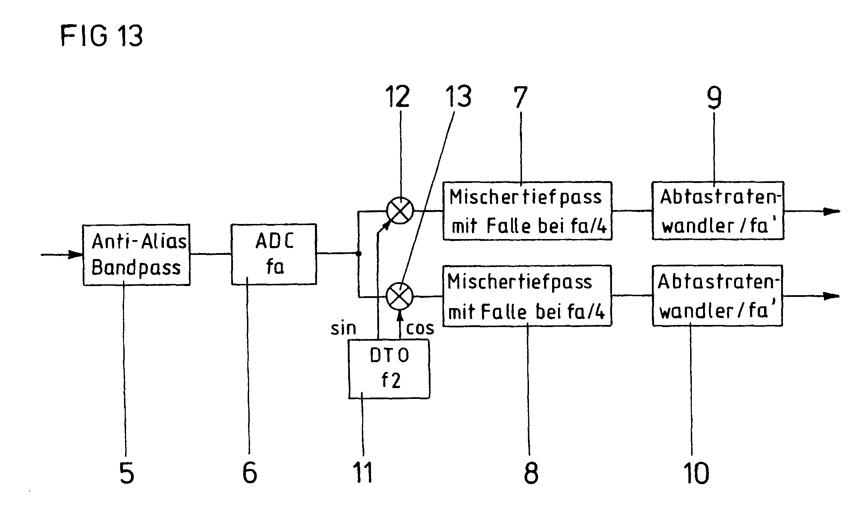

schenfrequenz-Stufe bzw. des Quadraturdemodulators von Fig. 12 bzw. 13 bei erfindungsgemäß festgelegten Zwischenfrequenz- und Abtastfrequenzen, wobei Fig. 8A das Spektrum nach der Zwischenfrequenz-Stufe zeigt, wobei Fig. 8B das Spektrum nach direkter Abtastung mit fa<f1 zeigt, wobei Fig. 8C das Spektrum nach Quadraturmischung zeigt, und wobei Fig. 8D das Spektrum nach Abtastratenwandlung (fa'<fa/2) zeigt,

| Fig. 9A und 9B | Frequenz-Amplitudendiagramme von Signalspektren an unterschiedlichen Meßpunkten des Tuners bzw. des Quadraturdemodulators von Fig. 12 bzw. 13 bei erfindungsgemäß festgelegten Zwischenfrequenz- und Abtastfrequenzen, wobei Fig. 9A das Spektrum nach direkter Abtastung mit fa = 4/5*f1 bzw. fa = 6/5*fa zeigt, und wobei Fig. 9B das Spektrum nach Quadraturmischung zeigt, |
| Fig. 10 | eine bevorzugte Ausführungsform eines Mischer-Tiefpasses im digitalen Quadraturdemodulator gemäß Fig. 2 bzw. Fig. 13 in Übereinstimmung mit der Erfindung, |
| Fig. 11 | eine bevorzugte Ausführungsform einer Tiefpaßfalle bei der Frequenz fa/4 im digitalen Quadraturdemodulator gemäß Fig. 2 bzw. Fig. 13 in Übereinstimmung mit der Erfindung, |
| Fig. 12 | ein Blockdiagramm einer Ausführungsform eines Tuners mit einer einzigen Zwischenfrequenz-Stufe einer Schaltung zur Demodulation von durch geträgerte Datenübertragung gesendeten zweidimensionalen Datensymbolen, und |
| Fig. 13 | ein Blockdiagramm einer Ausführungsform eines digitalen Quadraturdemodulators einer den Tuner von Fig. 12 umfassenden Schaltung zur Demodulation von durch geträgerte Datenübertragung gesendeten zweidimensionalen Datensymbolen mit direkter Abtastung der einzigen Zwischenfrequenz. |

Im Fall der Schaltung der im Oberbegriff des Anspruchs 1 genannten und in Fig. 1 und 2 gezeigten Art können die einleitend angesprochenen Probleme durch geeignete Wahl der Frequenzen f1, f2 und fa wie folgt gelöst werden:

$$f2 = f1 / 5,$$

$$fa = 4*f2 \text{ bzw. } fa = 4/5*f1$$

wobei f1 die Zwischenfrequenz der ersten Zwischenfrequenz-Stufe 2, f2 die Zwischenfrequenz der zweiten Zwischenfrequenz-Stufe 3 und fa die Abtastfrequenz des Analog/Digitalwandlers 6 sind.

Durch diese Wahl der Zwischenfrequenzen des Tuners und der Abtastfrequenz des Analog/Digitalwandlers 6 des digitalen Quadraturdemodulators wird die besonders unangenehme Störkomponente bei der Frequenz f1-f2 bzw. f1+f2, die vom Übersprechen des Oszillators der zweiten Zwischenfrequenz-Stufe 3 herrührt, in die Mitte des Übergangsbereichs des Mischer-Tiefpaßes 7, 8 gefaltet bzw. geschoben.

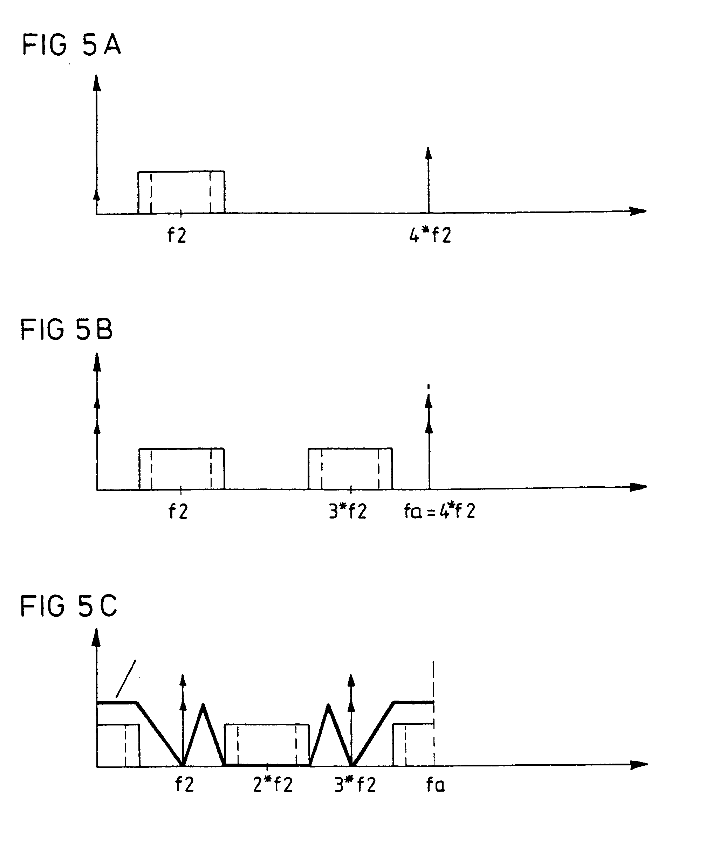

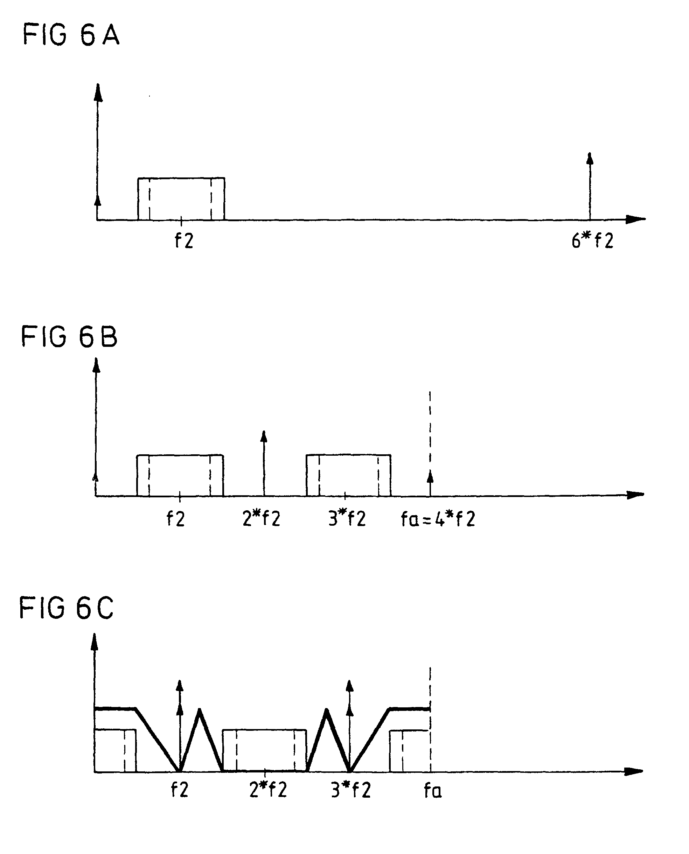

Fig. 5 und 6 zeigen dies im Detail. Fig. 5A zeigt das Spektrum nach Mischung mit f1-f2 = 4*f2 (f2 = f1/5) mit Übersprechen des Oszillators. Fig. 5B zeigt das Spektrum nach Abtastung mit fa = 4*f2 und Fig. 5C das Spektrum nach Quadraturmischung mit f2. Fig. 6A zeigt das Spektrum nach Mischung mit f1 + f2 = 6*f2 (f2 = f1/5) mit Übersprechen des Oszillators zeigt. Fig. 6B zeigt das Spektrum nach Abtastung mit fa = 4*f2 und Fig. 6C das Spektrum nach Quadraturmischung mit f2.

Im ersten Fall gilt: f1-f2 = 4*f2 = fa, d.h. die Störkomponente wird bei der Abtastung nach f = 0 gefaltet. Im zweiten Fall gilt: f1 +f2 = 6*f2 = fa + 2*f2, d.h. die Störkomponente wird nach f = 2*f2 = fa/2 gefaltet. Die Störkomponente liegt damit nach der Quadraturmischung genau bei einem Viertel der Abtastfrequenz und kann z.B. durch ein sehr einfaches Filter mit der Charakteristik $1+z^{-2}$ unterdrückt werden. Fig. 11 zeigt die zugehörige Schaltung.

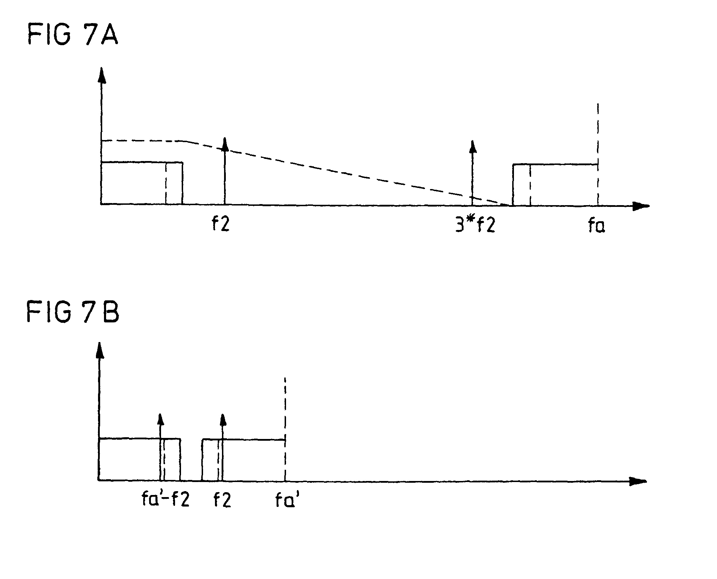

Fig. 7 (in welcher Fig. 7A das Spektrum nach Quadraturmischung mit f2 bei als unterdrückt angenommenen Summentermen und Fig. 7B das Spektrum nach Abtastratenwandlung (fa'<fa/2) darstellt) zeigt, daß die Komponente bei der Abtastratenwandlung ohne vorherige Filterung i.a. ins Nutzband gefaltet wird, da der zugehörige Dezimationstiefpaß so dimensioniert ist, daß er die Wiederholspektren bei den Vielfachen der Abtastfrequenz fa unterdrückt. Die Komponente bei f2 = fa/4 erfährt dabei keine merkliche Dämpfung. Der Mischer-Tiefpaß 7, 8, der je nach Anwendung als FIR- oder IIR-Filter ausgeführt sein kann, muß dabei so dimensioniert werden, daß er im Durchlaßbereich die Dämpfung, die durch die Frequenzfalle bewirkt wird, kompensiert. Dies ist ohne bzw. mit sehr geringem Zusatzaufwand möglich (siehe Fig. 13). Es ist auch möglich, die Nullstelle durch Erhöhung der Filterordnung um 2 in die Tiefpaßschaltung zu integrieren (Fig. 11) oder den Mischer-Tiefpaß mit dem Tiefpaßfilter des Abtastratenwandlers zu kombinieren. Die letztgenannte Variante wurde für den oben erwähnten Prozessor für DVB-T gewählt. Die einleitend angesprochenen Probleme 1 und 2 sind damit überwunden.

Durch die beschriebene Wahl der Frequenzen entsteht am Ausgang des digitalen Quadraturmischers ein Spektrum, in dem die Nutzanteile und die unerwünschten Mischerprodukte gleichmäßig verteilt sind: Beide Spektralanteile sind gleich breit und der Abstand zwischen den Anteilen ist maximal groß. Das einleitend angesprochene Problem 3 ist damit überwunden.

Da die Abtastfrequenz der Schaltungsblöcke bis zum Ausgang der Mischer-Tiefpässe 7, 8 nicht an die Symbolrate angepaßt werden muß, bleiben alle vorgenannten Eigenschaften unabhängig von der Symbolrate. Das einleitend angesprochene Problem 4 ist damit gelöst.

Ein Gleichanteil, der im Ausgangssignal des Analog/ Digitalwandlers enthalten ist, kann durch ungünstige Wahl der Zwischenfrequenzen und der Abtastfrequenz nach der Abtastratenwandlung ins Nutzband gefaltet werden (s. Fig. 7), d.h. er muß zusätzlich ausgefiltert werden.

Bei einer Dimensionierung gemäß der vorliegenden Erfindung wird der Gleichanteil durch die Quadraturmischung an dieselbe Stelle verschoben, an der auch das oben beschriebene Störsignal liegt (f2 = fa/4), d.h. die vom Gleichanteil herrührende Spektrallinie wird ohne weiteren Aufwand ebenfalls beseitigt.

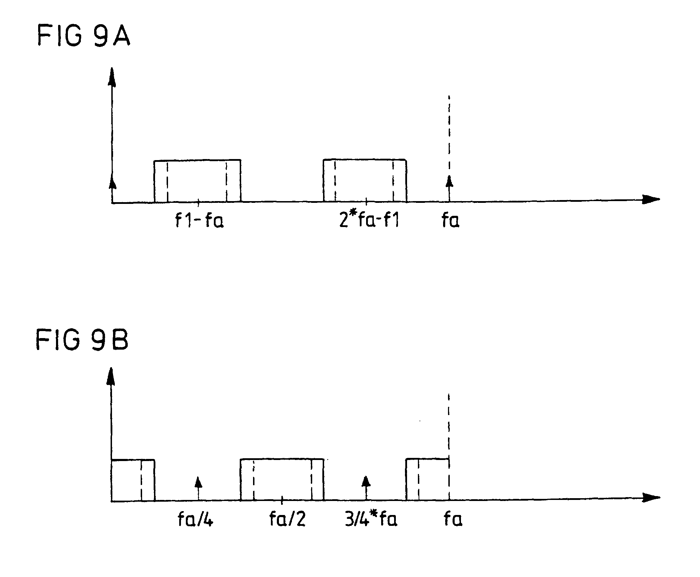

In Zukunft werden mit Fortschritt der Analog/ Digitalwandler-Technologie Empfängerkonzepte mit direkter Abtastung einer einzigen Zwischenfrequenz des Tuners möglich. Ein hierfür geeigneter Tuner und Quadraturdemodulator sind in Fig. 12 und 13 gezeigt, wobei dem Tuner in Fig. 2 und dem Quadraturdemodulator in Fig. 2 entsprechende Schaltungsbestandteile mit denselben Bezugsziffern bezeichnet sind. Eine Erläuterung gleicher Schaltungsbestandteile erübrigt sich deshalb. Hinzu kommt in Fig. 12 ein AGC-Schaltkreis 14 am Ausgang des Tuners; das Anti-Alias-Element 5 ist in Fig. 13 ein Bandpaß anstelle eines Tiefpaßes und die erste Zwischenfrequenz-Stufe in Fig. 12 verwendet eine Mischerfrequenz fm +/-f1 und die Mischer-Tiefpässe 7, 8 sind entsprechend Fig. 10 mit einer Falle bei fa/4 ausgelegt. Mit dieser Technik erübrigt sich die Problematik des Oszillatorübersprechens von Tunern mit zwei Zwischenfrequenz-Stufen. Die Notwendigkeit, die schädlichen Auswirkungen des Gleichanteils zu verhindern, bleibt jedoch bestehen (s. Fig. 8). Auf der Basis der vorliegenden Erfindung läßt sich zeigen, daß mit der Wahl fa = 4/5*f1 oder fa = 6/5*f1 erreicht wird, daß der Gleichanteil wieder nach fa/4 verschoben und dort mit dem modifizierten Mischer-Tiefpaß unterdrückt wird (s. Fig. 9). Die Wahl fa = 4/5*fa hat außerdem zur Folge, daß die gesamte digitale Demodulatorschaltung gemäß Fig. 1 und Fig. 2 unverändert übernommen werden kann, lediglich der Anti-Alias-Tiefpaß muß durch einen Anti-Alias-Bandpaß ersetzt werden (s. Fig. 13).

**Patentansprüche**

1. Schaltung zur Demodulation von durch geträgerte Datenübertragung gesendeten zweidimensionalen Datensymbolen, mit einem Tuner und einem diesem nachgeschalteten Quadraturdemodulator (11, 12, 13), wobei der Tuner eine erste Zwischenfrequenz-Stufe (2) zum Umsetzen der Trägerfrequenz fm eines die zweidimensionalen Datensymbole enthaltenden empfangsseitigen Eingangssignals auf eine erste Zwischenfrequenz f1, ein der ersten Zwischenfrequenz-Stufe (2) nachgeschaltetes Oberflächenwellenfilter (4) und eine diesem nachgeschaltete zweite Zwischenfrequenz-Stufe (3) zum Umsetzen der Trägerfrequenz des Eingangssignals auf eine zweite Zwischenfrequenz f2, die kleiner ist als die erste Zwischenfrequenz f1, aufweist, und wobei der Quadraturdemodulator (11, 12, 13) das Eingangssignal mit der zweiten Träger-Zwischenfrequenz f2 in ein Basisband umsetzt und eine Aufspaltung in Inphase- und Quadraturkomponenten durchführt und einen A/D-Wandler (6) mit einer vorgegebenen Abtastfrequenz fa enthält, dem ein Anti-Alias-Filter (5) vorgeschaltet ist, um störende Signalspektralanteile vom Nutzsignal zu entfernen, **gekennzeichnet durch** mindestens annähernd folgende Beziehung zwischen den ersten und zweiten Zwischenfrequenzen f1, f2 und der Abtastfrequenz fa des A/D-Wandlers (6):

$$f2 = f1/5$$

und

$$fa = 4 \cdot f2$$

oder

$$fa = 4/5 \cdot f1.$$

2. Schaltung zur Demodulation von durch geträgerte Datenübertragung gesendeten zweidimensionalen Datensymbolen, mit einem Tuner und einem diesem nachgeschalteten Quadraturdemodulator (11, 12, 13), wobei der Tuner eine einzige Zwischenfrequenz-Stufe (2) zum Umsetzen der Trägerfrequenz fm eines die zweidimensionalen Datensymbole enthaltenden empfangsseitigen Eingangssignals auf eine Zwischenfrequenz f1 und ein der Zwischenfrequenz-Stufe (2) nachgeschalteten Oberflächenfilter (4) aufweist, und wobei der Quadraturdemodulator (11, 12, 13) das Eingangssignal mit der Zwischenfrequenz f1 in ein Basisband umsetzt und eine Aufspaltung in Inphase- und Quadraturkomponenten durchführt und einen A/D-Wandler (6) mit einer vorgegebenen Abtastfrequenz fa enthält, dem ein Anti-Alias-Filter (5) vorgeschaltet ist, um störende Signalspektralanteile vom Nutzsignal zu entfernen, **gekennzeichnet durch** mindestens annähernd folgende Beziehung zwischen der Zwischenfrequenz f1 und der Abtastfrequenz fa des A/D-Wandlers (6):

$$fa = 4/5 \cdot f1$$

oder

$$fa = 6/5 \cdot f1.$$

3. Schaltung nach Anspruch 1 oder 2, **dadurch gekennzeichnet, daß** der Anti-Alias-Filter (5) als Tiefpaß oder Bandpaß realisiert ist.

4. Schaltung nach Anspruch 1, 2 oder 3, **dadurch gekennzeichnet, daß** der Quadraturdemodulator (11, 12, 13) eine dem A/D-Wandler (6) nachgeschaltete Einrichtung zur Entfernung der Frequenz fa/4 aufweist.

5. Schaltung nach Anspruch 4, **dadurch gekennzeichnet, daß** die Entfernungseinrichtung eine Mischer-Tiefpaßanordnung(7, 8) mit Frequenzfalle bei fa/4 aufweist.

6. Schaltung nach Anspruch 4, **dadurch gekennzeichnet, daß** die Entfernungseinrichtung eine Mischer-Tiefpaßfilteranordnung mit Nullstelle aufweist.

7. Schaltung nach Anspruch 4, **dadurch gekennzeichnet, daß** der Quadraturdemodulator (11, 12, 13) eine dem A/D-Wandler (6) nachgeschalteten Mischer-Tiefpaßanordnung (7, 8) aufweist, die mit dem Tiefpaßfilter eines nachgeordneten Abtastratenwandlers (9, 10) kombiniert ist.

**Claims**

1. Circuit for demodulating two-dimensional data symbols transmitted by carrier-based data transmission, having a tuner and a quadrature demodulator (11, 12, 13) connected downstream thereof, the tuner having a first intermediate frequency stage (2) for converting the carrier frequency fm for a reception-side input signal containing the two-dimensional data symbols to a first intermediate frequency f1, a surface wave filter (4) connected downstream of the first intermediate frequency stage (2), and a second intermediate frequency stage (3), connected downstream of said surface wave filter, for converting the input signal's carrier frequency to a second intermediate frequency f2, which is lower than the first intermediate frequency f1, and the quadrature demodulator (11, 12, 13) converting the input signal at the second carrier intermediate frequency f2 to a baseband and splitting it into in-phase and quadrature components and containing an A/D converter (6) with a prescribed sampling frequency fa, an anti-alias filter (5) being connected upstream of said A/D converter in order to remove interfering spectral components from the useful signal, **characterized by** at least approximately the following relationship between the first and second intermediate frequencies f1, f2 and the sampling frequency fa of the A/D converter (6):

$$f2 = f1/5$$

and

$$fa = 4 \cdot f2$$

or

$$fa = 4/5 \cdot f1.$$

2. Circuit for demodulating two-dimensional data symbols transmitted by carrier-based data transmission, having a tuner and a quadrature demodulator (11, 12, 13) connected downstream thereof, the tuner having a single intermediate frequency stage (2) for converting the carrier frequency fm for a reception-side input signal containing the two-dimensional data symbols to an intermediate frequency f1, and a surface wave filter (4) connected downstream of the intermediate frequency stage (2), and the quadrature demodulator (11, 12, 13) converting the input signal at the intermediate frequency f1 to a baseband and splitting it into in-phase and quadrature components, and containing an A/D converter (6) with a prescribed sampling frequency fa, an anti-alias filter (5) being connected upstream of said A/D converter in order to remove interfering spectral components from the useful signal, **characterized by** at least approximately the following relationship between the intermediate frequency f1 and the sampling frequency fa of the A/D converter (6):

$$fa = 4/5 \cdot f1$$

or

$$fa = 6/5 \cdot f1$$

3. Circuit according to Claim 1 or 2, **characterized in that** the anti-alias filter (5) is in the form of a low-pass filter or a bandpass filter.

4. Circuit according to Claim 1, 2, or 3, **characterized in that** the quadrature demodulator (11, 12, 13) has a device, connected downstream of the A/D converter (6), for removing the frequency fa/4.

5. Circuit according to Claim 4, **characterized in that** the removal device has a mixer low-pass arrangement (7, 8) with a frequency trap at fa/4.

6. Circuit according to Claim 4, **characterized in that** the removal device has a mixer low-pass filter arrangement with a zero.

7. Circuit according to Claim 4, **characterized in that** the quadrature demodulator (11, 12, 13) has a mixer low-pass filter arrangement (7, 8) which is connected downstream of the A/D converter (6) and is combined with the low-pass filter in a downstream-connected sampling rate converter (9, 10).

**Revendications**

1. Circuit pour la démodulation de symboles de données à deux dimensions envoyés par transmission de données supportée, comportant un tuner et un démodulateur en quadrature (11, 12, 13) branché du côté aval du tuner, dans lequel le tuner comporte un premier étage à fréquence intermédiaire (2) pour la conversion de la fréquence porteuse fm d'un signal d'entrée côté réception contenant les symboles de données à deux dimensions sur une première fréquence intermédiaire f1, un filtre à ondes de surface (4) branché du côté aval du premier étage à fréquence intermédiaire (2) et un deuxième étage à fréquence intermédiaire (3) branché du côté aval du filtre pour la conversion de la fréquence porteuse du signal d'entrée sur une deuxième fréquence intermédiaire f2 qui est inférieure à la première fréquence intermédiaire f1 et dans lequel le démodulateur en quadrature (11, 12, 13) convertit le signal d'entrée avec la deuxième fréquence intermédiaire porteuse f2 dans une bande de base, effectue une décomposition en composantes en phase et en quadrature et contient un convertisseur analogique-numérique (6) qui a une fréquence d'échantillonnage prédéterminée fa et du côté amont duquel est branché un filtre antirepliement (5) pour éliminer du signal utile des composantes spectrales de signal parasites,

**caractérisé par** au moins approximativement la relation suivante entre la première et la deuxième fréquence intermédiaire f1, f2 et la fréquence d'échantillonnage fa du convertisseur analogique-numérique (6) :

$$f2 = f1/5$$

et

$$fa = 4 \cdot f2$$

ou

$$fa = 4/5 \cdot f1.$$

**2.** Circuit pour la démodulation de symboles de données à deux dimensions envoyés par transmission de données supportée, comportant un tuner et un démodulateur en quadrature (11, 12, 13) branché du côté aval du tuner, dans lequel le tuner comporte un seul étage à fréquence intermédiaire (2) pour la conversion de la fréquence porteuse fm d'un signal d'entrée côté réception contenant les symboles de données à deux dimensions sur une fréquence intermédiaire f1 et un filtre à ondes de surface (4) branché du côté aval de l'étage à fréquence intermédiaire (2) et dans lequel le démodulateur en quadrature (11, 12, 13) convertit le signal d'entrée avec la fréquence intermédiaire f1 dans une bande de base, effectue une décomposition en composantes en phase et en quadrature et contient un convertisseur analogique-numérique (6) qui a une fréquence d'échantillonnage prédéterminée fa et du côté amont duquel est branché un filtre antirepliement (5) pour éliminer du signal utile des composantes spectrales de signal parasites,

**caractérisé par** au moins approximativement la relation suivante entre la fréquence intermédiaire f1 et la fréquence d'échantillonnage fa du convertisseur analogique-numérique (6) :

$$fa = 4/5 \cdot f1$$

ou

$$fa = 6/5 \cdot f1.$$

**3.** Circuit selon la revendication 1 ou 2, **caractérisé par le fait que** le filtre antirepliement (5) est réalisé comme un filtre passe-bas ou comme un filtre passe-bande.

**4.** Circuit selon la revendication 1, 2 ou 3, **caractérisé par le fait que** le démodulateur en quadrature (11, 12, 13) comporte un dispositif branché du côté aval du convertisseur analogique-numérique (6) pour éliminer la fréquence fa/4.

**5.** Circuit selon la revendication 4, **caractérisé par le fait que** le dispositif d'élimination comporte un dispositif passe-bas mélangeur (7, 8) avec piège de fréquence à fa/4.

**6.** Circuit selon la revendication 4, **caractérisé par le fait que** le dispositif d'élimination comporte un dispositif passe-bas mélangeur avec zéro.

**7.** Circuit selon la revendication 4, **caractérisé par le fait que** le démodulateur en quadrature (11, 12, 13) comporte un dispositif passe-bas mélangeur (7, 8) qui est branché du côté aval du convertisseur analogique-numérique (6) et qui est combiné avec le filtre passe-bas d'un convertisseur de taux d'échantillonnage (9, 10) agencé du côté aval.

FIG 1

| fm | 1. ZF-Stufe fm +/- f1 | f1 | OFW | 2. ZF-Stufe f1 +/- f2 | f2 |
| 1 | 2 | | 4 | 3 | |

FIG 2

Anti-Alias Tiefpass — 5
ADC fa — 6
DTO f2 — 11
Mischer-Tiefpass — 7
Mischer-Tiefpass — 8
Abtastraten-wandler / fa' — 9
Abtastraten-wandler / fa' — 10
12 13

FIG 3 A

f2  f1-f2  f1

FIG 3 B

f2  f1-f2  2*f1-f2

FIG 3 C

f2  f1-f2

FIG 3 D

fa-f1+f2  f1-f2

f2  fa-f2  fa

FIG 4 A

FIG 4 B

FIG 4 C

FIG 4 D

FIG 5 A

FIG 5 B

FIG 5 C

FIG 6 A

FIG 6 B

FIG 6 C

FIG 7A

f2          3*f2          fa

FIG 7B

fa'-f2    f2    fa'

FIG 8 A

FIG 8 B

FIG 8 C

FIG 8 D

FIG 9A

f1-fa      2*fa-f1      fa

FIG 9B

fa/4      fa/2      3/4*fa      fa

FIG 10

7,8

| Tiefpass zur Unterdrückung der Summenterme | Falle bei der Frequenz fa/4 |
| --- | --- |

FIG 11

Verzögerung um 2 Takte

7,8

FIG 12

fm → | 1. ZF-Stufe fm +/- f1 | f1 | OFW | | AGC | →

1        2        4        14

# FIG 13